# EUROPEAN PATENT APPLICATION

(11) **EP 2 395 633 A2**
(43) Date of publication of application: **14.12.2011**
(21) Application number: 11169148.1
(22) Date of filing: 08.06.2011
(51) Int. Cl.: H02K 3/28, H02K 7/14, F04B 35/04, H02K 11/00

(54) **Displacement compressor**

(30) Priority: 11.06.2010 JP 2010133506
(71) Applicant: Hitachi Appliances, Inc., Minato-ku Tokyo (JP)
(72) Inventor: Tsuchiya, Takeshi, Shizuoka (JP); Hasegawa, Shuji, Shizuoka (JP); Miyake, Masashi, Shizuoka (JP); Fukaya, Yoshihiro, Shizuoka (JP); Obata, Koji, Tokyo, 100-8220 (JP); Yamada, Shinichiro, Shizuoka (JP); Matsunaga, Mutsunori, Shizuoka (JP); Ohtahara, Masaru, Shizuoka (JP)
(74) Representative: Beetz & Partner

(57) **Abstract**

In a displacement compressor (1) aiming at a high annual performance factor (APF) and a high integrated part load value (IPLV), since a driving current at a time of a high load becomes larger than a conventional one so as to cause an increase of an electric current flowing in a bearing portion, there is a problem of lowering a bearing reliability due to an electric wear of bearing. The invention lightens a bearing damage due to the electric wear of bearing so as to enhance the bearing reliability of the displacement compressor by reducing an electric current itself flowing in a bearing portion, and provides a displacement compressor having a high energy efficiency which can mount a high performance inverter capable of switching at a high speed. Neutral points (22-N1, 22-N2, 22-N3) in respective three phases are connected as shown in Figs. 2 and 3, and a general neutral point (23-N) connecting the neutral points (22-N1, 22-N2, 22-N3) in the respective three phases is arranged.

## Description

### Background of the invention

### (1) Field of the invention

The present invention relates to a displacement compressor which treats a refrigerant of a hydro fluoro carbon (HFC) system or the like, a natural refrigerant such as an air, a carbon dioxide or the like, and the other compressible gas, and more particularly to a structure which is preferable for reducing a damage of bearing due to an electric wear of bearing so as to enhance a reliability of bearing.

### (2) Description of related art

The displacement compressor is widely made good use as a compressor for a refrigeration air conditioning device in various fields. A high efficiency is demanded for preventing a global warming, and on the other hand, a high reliability is necessary since it is exposed to a very severe operation. In recent years, in the displacement compressor, a variable speed operation using a inverter is increased, and a high efficiency is in advance in comparison with the conventional on-off operation.

In accordance with non-patent document 1 described below, an application of an insulated gate bipolar transistor (IGBT) is advancing and a rising edge of a switching becomes steep, whereby an up and down fluctuation of a neutral point voltage in a winding (which is called as a common mode voltage) becomes steep, and a case running into the electric wear of bearing is increased. Particularly, it is considered to be out of the question in an electric motor of 37 kW or less, however, the electric wear of bearing is generated regardless of an output of the electric motor.

In patent document 1 described below, there is described an electric motor having an armature winding a coil winding for driving, a magnetic field formed by installing a plurality of magnets to a rotor constructed by a lamination core, and a bearing, wherein the electric motor is provided with a primary coil which is provided in a side of an armature constructing a stator, and is wound around a first ferrite core, and a secondary coil which is provided in a rotor of a magnetic field via the primary coil and an air gap, and is wound around a second ferrite core, the primary coil is connected between a neutral point of a Y connection of the driving coil winding in the armature and a frame, and a resistance is connected to the secondary coil provided in the side of the rotor, whereby a solving means is provided. Therefore, it is possible to provide an electric wear preventing apparatus of the electric motor which is inexpensive, is maintenance free, and can easily avoid a harmonic voltage and current generated in a movable element, by the solving means.

In patent document 2 described below, there is described a power converting apparatus provided with a three phase PWM inverter outputting an electric voltage of variable voltage and variable frequency on the basis of a pulse width modulation, and a common mode commutating reactor connected in series between the inverter and an electric motor, wherein a fourth coil winding is wound on the same core as the common mode communicating reactor, an inductor is connected to an output of the three phase PWM inverter in its one end, and is connected to one end of the fourth coil winding in its another end corresponding to a neutral point so as to be star connected, and another end of the fourth coil winding is connected to the neutral point or any one of a positive side or a negative side of the converter output which divides the output voltage of the converter into two equal parts, whereby a solving means is provided. Therefore, it is possible to suppress a common mode voltage and a leakage current which are generated in the three phase PWM inverter output.

In patent document 3 described below, a stator has a stator core which is attached to a case, and a coil winding which is wound around the stator core. A rotor core has a rotor core main body and a connection portion, and a rotating shaft made of a metal is connected to the rotor core via the connection portion. The rotating shaft is rotatably attached to the case via a bearing. Describing in more detail, the bearing has an inner ring which supports the rotating shaft, an outer ring which is attached to the case, and rolling elements which rotate between the inner ring and the outer ring. The rolling element is constructed, for example, by a ball or a roller, and is made of a metal in the same manner as the inner ring and the outer ring. A solving means is provided as mentioned above. Therefore, it is possible to reduce an electric wear of the bearing and it is further possible to provide an electric motor which is excellent in a strength of the rotating shaft.

In patent document 4 described below, there is described a three phase electric motor wherein in the case that one end side portions of respective phase U, V and W coil windings are set to first crossovers U1, V1 and W1, another end side portions of the respective phase coil windings are set to (n + 1)-th crossovers U4, V4 and W4, and i-th crossovers Ui, Vi and Wi are set between (i ― 1)-th coil and i-th coil counting from the coil winding one end side portion per each of the phases, on the assumption that i is an integral number which is equal to or more than 2 and equal to or less than n, a power supply line is formed by getting (odd number)-th crossovers in each of the phases together into one per each of the phases so as to connect, and a neutral point is formed by getting (even number)-th crossovers in each of the phases together into one in each of the phases, whereby a solving means is provided. Therefore, it is possible to provide a three phase electric motor in which a connecting number or a connecting position of the neutral points and the power supply lines is reduced.

In patent document 5 described below, there is described a solving means in which a crossover connecting neutral points to each other is constructed so as to be equal to or more than a wire diameter of each of the phase coil windings, or a neutral point connection is carried out by a connecting terminal which is equivalent thereto, in such a manner as to prevent a heat concentration from being generated in the neutral point on the basis of a relation between a volume of a connecting position of the neutral points and a joule heat generated at this position. Therefore, it is possible to provide a neutral point structure in which the connecting position of the neutral points is made minimum and the heat concentration to the neutral points is done away, whereby a height in an axial direction of the armature coil winding is held down.
Patent Document 1: JP-A-2006-87225
Patent Document 2: JP-A-2001-268922
Patent Document 3: JP-A-2008-263698
Patent Document 4: JP-A-2001-275292
Patent Document 5: JP-A-10-80085

Non-Patent Document 1: Japan Electrical Manufacturers' Association Document JEM-TR 169, Supplementary Explanation Document Relating To Application Guide In Case Of Inverter Driving Generally Used Low Pressure Three Phase Cage Type Induction Motor, As To Electric Wear Of Bearing In Case Of Inverter Driving Induction Motor, February 2004

The application of the insulated gate bipolar transistor (IGBT) to the inverter is advanced, the up and down fluctuation of the neutral point voltage (the common mode voltage) is generated in the electric motor coil winding having the steep rising edge by the high speed switching, and there comes to such a circumstance that the electric wear of bearing which is considered to be out of the question in the electric motor of 37 kW or less is generated regardless of the output of the electric motor.

Further, in recent years, in the refrigeration air conditioning device, it is assumed to be desirable in the light of an energy saving to improve an annual performance factor (APF) and an integrated part load value (IPLV), and it becomes important to improve an energy efficiency at a time of a low load application. In addition, it is necessary to satisfy a demand of a high loaded quick heating or quick cooling/freezing which is opposed thereto, and a high efficiency inverter driven permanent magnet type electric motor is frequently used in the displacement compressor which is mounted in the refrigeration air conditioning device. The permanent magnet type electric motor can improve an efficiency at a time of the low load application by increasing the winding number of the stator coil winding, however, since the torque at a high speed is lowered, a field-weakening control is frequently used together as the inverter control. In this case, since a driving current (an input current from the inverter to the motor) at a time of the high load application becomes more than the conventional one, there has been found such a problem that an increase of the electric current flowing in the bearing portion is caused.

Further, in recent years, a high capacity of the air conditioning device is advanced and a low speed and high load operation condition is increased. As a result, there is such a problem that the increase of the driving current (the input current from the inverter to the motor) at a time of the low speed causes an increase of the electric current flowing in the bearing portion.

### Brief summary of the invention

An object of the present invention is to enhance a bearing reliability.

The patent document 1 is structured such as to prevent an electric wear by providing a bypass means constructed by the primary coil and the secondary coil so as to avoid an electric current flowing to the bearing portion. The patent document 2 is structured such as to cancel a common mode voltage by adding the common mode voltages causing the bearing current to each other in the opposite phases. The patent document 3 is structured such that the potential difference between the rotating shaft and the ground is divided into a parasitic capacity of the bearing and a parasitic capacity parasitizing while holding an insulating material therebetween, it is possible to reduce the potential difference applied to the bearing, and it is possible to reduce the electric wear of the bearing. Each of the inventions is structured such as to bypass the electric current flowing in the bearing portion, cancel it by adding in the opposite phases, or divide by holding the insulating material therebetween, and non of the inventions reduces the electric current itself flowing in the bearing portion.

Further, the present invention is characterized by connecting a plurality of neutral points to each other for reducing the electric current flowing in the bearing portion. The patent document 4 has a description that it has an effect on a reduction of the connecting number or the connecting positions of the neutral points, however, does not have any description that the electric current itself flowing in the bearing portion is reduced by connecting the neutral points. The patent document 5 has a description that it has an effect on making the connecting positions of the neutral point minimum so as to do away with the heat concentration on the neutral points, and holding down the height in the axial direction of the armature coil winding. Further, there is such a description that since the voltages of the neutral points are equal theoretically in the case that a plurality of neutral points are provided, any crossover is not necessary, however, the armature coil winding has an unbalance on mounting, and they do not completely come to an equal voltage, and it is necessary to provide the crossover serving as an equalizing connector of the neutral points in the case of driving the electric motor by the inverter and actuating the protection function while monitoring the unbalance of the respective phase currents. However, there is no description that the electric current itself flowing in the bearing portion is reduced by connecting the neutral points.

In order to solve the object mentioned above, a displacement compressor in accordance with the present invention is characterized by a structure described in each of claims. Particularly, in accordance with the invention described in claim 1 corresponding to an independent claim, there is provided a displacement compressor including a compressing mechanism portion carrying out a compressing action, a driving means for driving the compressing mechanism portion, an electric motor serving as a substantial part of the driving means and applied a Y connection three-phase coil winding having a plurality of neutral points, an inverter control device driving the electric motor, a crank shaft rotationally driven by the electric motor, a crank shaft support portion rotatably engaging the crank shaft, a frame portion engaging a shaft support portion of the crank shaft, and a sealed container storing the compressing mechanism portion and the driving means, characterized in that the neutral points of the electric motor to which the Y connection three-phase coil winding having a plurality of the neutral points is applied are connected to each other.

In the displacement compressor in accordance with the present invention, it is preferable that the electric motor is constructed as a permanent magnet type electric motor having a stator which is formed by concentrated winding a stator coil winding around a stator core of the electric motor, and a rotor which is opposed to the stator via a gap in a peripheral direction and forms a magnetic pole by installing a permanent magnet to a rotor core in an axial direction.

In the displacement compressor in accordance with the present invention, it is preferable that the permanent magnet type electric motor is constructed so as to have six poles and nine slots.

In the displacement compressor in accordance with the present invention, it is preferable that the store core of the electric motor is annealed.

In the displacement compressor in accordance with the present invention, it is preferable that a plurality of permanent magnets are arranged in the rotor core of the electric motor, and a part of an outer peripheral surface of the rotor core close to an axis q is cut, on the assumption that an axis d is close to a magnetic flux of the permanent magnet, and the axis q is an axis which is orthogonal to the axis d at an electrical angle.

In the displacement compressor in accordance with the present invention, it is preferable that a shaft support portion of the crank shaft is insulated.

In the displacement compressor in accordance with the present invention, it is preferable that the insulation of the crank shaft support portion is achieved by interposing an insulating member between the crank shaft support portion, and the frame portion engaging with the crank shaft support portion.

In the displacement compressor in accordance with the present invention, it is preferable that the insulation of the crank shaft support portion is achieved by molding by resin the frame portion engaging with the crank shaft support portion.

In the displacement compressor in accordance with the present invention, it is preferable that the insulation of the crank shaft support portion is achieved by applying an annealing to the frame portion engaging with the crank shaft support portion.

In the displacement compressor in accordance with the present invention, it is preferable that the insulation of the crank shaft support portion is achieved by interposing an insulating member in the crank shaft portion rotatably engaging with the crank shaft support portion.

In the displacement compressor in accordance with the present invention, it is preferable that a field-weakening control is used as the inverter control device driving the electric motor.

In the displacement compressor in accordance with the present invention, it is preferable that a mechanical capacity control means is constructed in the compressing mechanism portion.

In the displacement compressor in accordance with the present invention, it is preferable that a discharge valve is used in the compressing mechanism portion.

### Effect of the invention

In accordance with the present invention, it is possible to enhance a bearing reliability. Further, since it is possible to mount the high performance inverter capable of carrying out the high speed switching in the variable speed operation using the inverter for achieving the high efficiency of the displacement compressor and it is possible to intend to secure a high energy efficiency, it is possible to achieve the displacement compressor which is preferable for achieving the high energy efficiency and the high bearing reliability.

### Brief description of the several views of the drawings

Fig. 1 shows a whole structure of a displacement compressor in accordance with a first embodiment;
Fig. 2 shows a cross section (a portion along a line A-A) of an electric motor in accordance with the first embodiment;
Fig. 3 is an expansion plan view of a coil winding in accordance with the first embodiment;
Fig. 4 shows a result of measurement of a bearing current in accordance with the first embodiment;
Fig. 5 is a cross sectional view of a rotor in accordance with a second embodiment;
Fig. 6 shows a displacement control mechanism of a displacement compressor in accordance with a third embodiment;
Fig. 7 shows a discharge valve structure of a scroll compressor in accordance with a fourth embodiment;
Fig. 8 shows a structure in the periphery of a shaft support portion of a displacement compressor in accordance with a fifth embodiment;
Fig. 9 shows a structure in the periphery of a shaft support portion of a displacement compressor in accordance with a sixth embodiment; and
Fig. 10 shows a structure in the periphery of a shaft support portion of a displacement compressor in accordance with a tenth embodiment.

### Description of reference numerals

1 displacement compressor
2 compressing portion
2a, 32, 41 compressing chamber
3 driving portion
4, 54, 64, 74 sealed container
5 suction port
6 discharge port
7 stator
8, 25 rotor
9 electric motor
10, 51, 61, 70 crank shaft
11 frame
12, 53, 63, 73 auxiliary frame
13, 14, 50, 61, 71 shaft support portion
15, 52, 62, 72 auxiliary bearing housing
16 electric terminal
17 oil
20 permanent magnet
21 stator coil winding
22 neutral point
23 integrated neutral point
30 capacity control mechanism
30a, 30b communicating path
30c control means
40 discharge valve structure
40a valve body
40b spring
40c retainer
42 discharge space
65 fixing bolt
66, 67 insulating sheet
75 insulating member

### Detailed description of the invention

A description will be given below of an embodiment with reference to the accompanying drawings.

### Embodiment 1

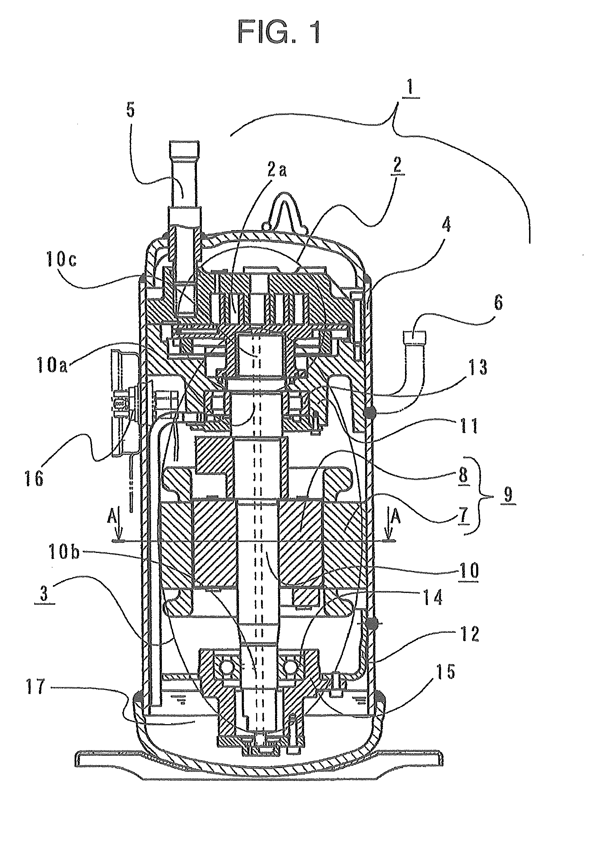

A description will be given in detail of a displacement compressor showing a first embodiment for carrying out the present invention with reference to Figs. 1 to 4.

First of all, a description will be given of a whole structure of the displacement compressor showing the first embodiment with reference to Fig. 1. A displacement compressor 1 is constructed by storing a compressing portion 2 and a driving portion 3 within a sealed container 4. In this case, a compressing type of the illustrated displacement compressor 1 is a scroll type, however, it may be a rotary type, a reciprocating type or a screw type compressing system.

In the compressing portion 2, a compressing action is carried out by reducing a capacity of a mechanically constructed compressing chamber 2a on the basis of a rotating action of the driving portion 3. In conjunction with this compressing action, a working fluid is sucked into the compressing chamber via a suction port 5 and a suction space, and the sucked working fluid is discharged to a discharge space corresponding to a space surrounded by the sealed container 4 via a compressing stroke, and is further discharged from the sealed container 4 via a discharge port 6.

The driving portion 3 is constructed by using an electric motor 9 including a stator 7 and a rotor 8, a crank shaft 10, a frame 11, an auxiliary frame 12 and an auxiliary bearing housing 15 as basic elements. In this case, the electric motor 9 is driven by an electric input from an inverter (not shown) via an electric terminal 16, and applies a rotating action to the crank shaft 10. The crank shaft 10 is structured such as to be provided with a main shaft portion 10a, an auxiliary shaft portion 10b and an eccentric pin 10c. A shaft support portion 13 arranged in the frame 11, and a shaft support portion 14 arranged in the auxiliary bearing housing 15 construct a shaft support portion which rotatably engages the main shaft portion 10a and the auxiliary shaft portion 10b of the crank shaft 10. In this case, the shaft support portions 13 and 14 may employ a slide bearing which can adjust to a used condition and the other shaft support members, in addition to a rolling bearing. Further, an oil 17 for lubricating the shaft support portions 13 and 14 is stored within the sealed container 4, and the frame 11 and the auxiliary frame 12 engaged with the frame 11 are fixed to the sealed container 4.

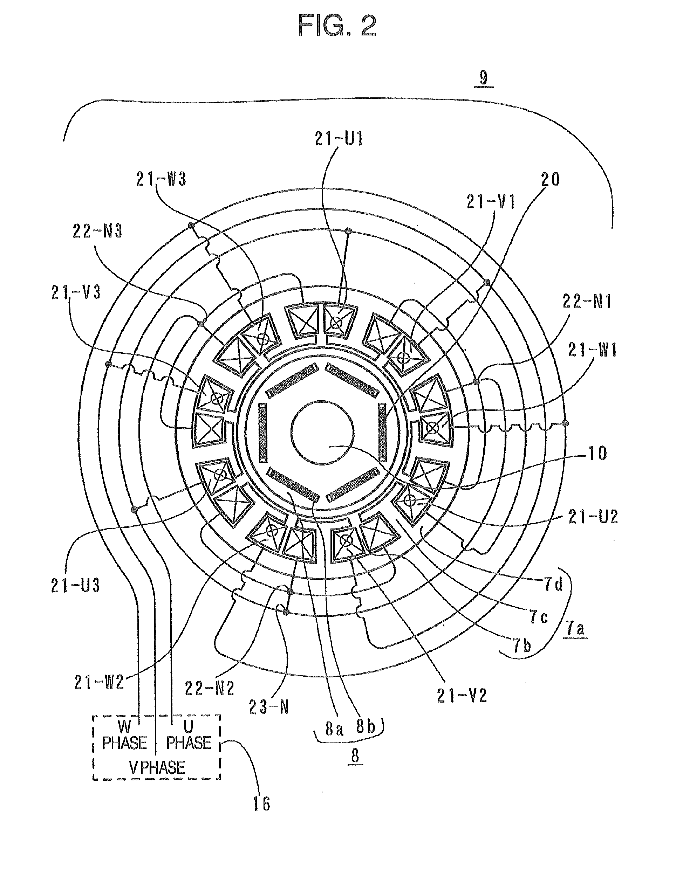

Subsequently, a description will be given of a structure of the electric motor 9 with reference to Fig. 2. Fig. 2 shows a cross section (a portion along a line A-A) of the electric motor 9 shown in Fig. 1. The illustrated electric motor 9 is provided with the rotor 8 which is fixed to the crank shaft 10, and the stator 7 which is opposed to the rotor 8 via an air gap in a peripheral direction. The rotor 8 is provided with a rotor core 8a and permanent magnets 20 which are installed respectively into six installation holes 8b formed in parallel to the crank shaft 10. Six magnetic poles are formed in the rotor core 8a on the basis of the installation of the permanent magnets 20. The stator 7 has a stator core 7a and a stator winding 21. The stator core 7a has nine slots 7b which are formed in an inner diameter side at even intervals in a peripheral direction, nine tooth portions 7c, and a core pack 7d which integrally connects outer peripheral sides of the tooth portions 7c, and is applied an annealing treatment. The stator coil winding 21 is of a concentrated winding type that it is wound in such a manner as to surround the tooth portions 7c, and is provided with a U-phase coil winding 21-U, a V-phase coil winding 21-V and a W-phase coil winding 21-W. As mentioned above, the electric motor 9 constructs a concentrated winding permanent magnet type electric motor having six poles and nine slots.

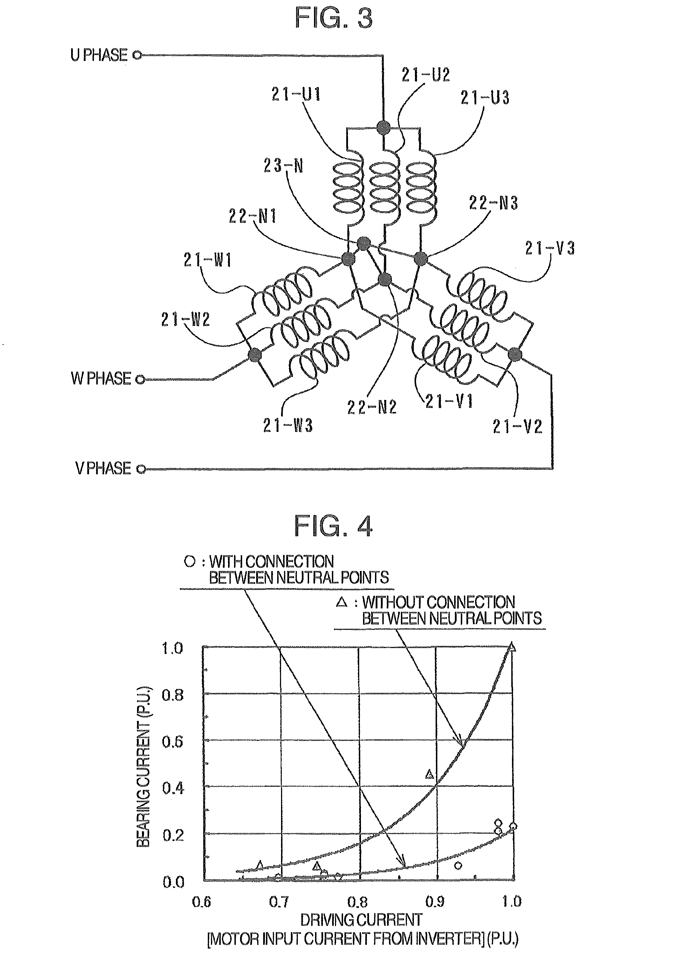

The respective stator coil windings 21 in Fig. 2 are structured, as shown by a coil winding expansion plan view in Fig. 3, such that the stator coil windings 21-U1, 21-V1, 21-W1, 21-U2, 21-V2, 21-W2, 21-U3, 21-V3 and 21-W3 are connected to the tooth portions 7c of the stator in such a manner as to be in parallel in each of the phases. Further, neutral points 22-N1, 22-N2 and 22-N3 of the respective three phases are connected as shown in Figs. 2 and 3, and a general neutral point 23-N connecting the neutral points 22-N1, 22-N2 and 22-N3 in the respective three phases to each other is further arranged. At a time of driving the electric motor 9, an inverter driving apparatus (not shown) is used, and a field-weakening control is applied as the inverter control.

A description will be given of an effect of the present embodiment. Measuring a bearing current of the displacement compressor shown in the present embodiment, a result of measurement shown in Fig. 4 is obtained. The bearing current passing through the bearing portion in a vertical axis relatively displays a maximum current in the case that the neutral points 22-N1, 22-N2 and 22-N3 of the respective three phases are not connected to each other, that is, the case that the element 23-N does not exist, as 1 P.U., and a driving current (an input current from the inverter to the motor) in a horizontal axis relatively displays a maximum operation current as 1 P.U.. In Fig. 4, there is shown comparatively a case that the neutral points 22-N1, 22-N2 and 22-N3 of the respective three phases are connected, and a case that they are not connected.

As a result, in order to fulfill the demands of an improvement of an annual performance factor (APF) and an integrated part load value (IPLV) in recent years, in the structure of the displacement compressor which can achieve a compatibility of an improvement of an energy efficiency at a time of a low load and the demands of a quick heating or a quick cooling/freezing performance under a high load, since the driving current at a time of the high load becomes greater than the conventional one, it has been known that a rapid increase of the electric current flowing through the bearing portion is caused in the case that the neutral points 22-N1, 22-N2 and 22-N3 of the respective three phases are not connected. On the other hand, if the neutral points 22-N1, 22-N2 and 22-N3 of the respective three phases are connected and the element 23-N is provided, it has been known that the rapid increase of the electric current flowing through the bearing portion can be suppressed even in the case that the driving current is great at a time of the high load. The rapid increase of the bearing current is recognized if the driving current goes beyond about 0.8 P.U., however, the rapid increase of the bearing current can be suppressed by connecting the neutral points of the respective three phases. In this case, the electric motor 9 in the present embodiment shows the concentrated winding permanent magnet type electric motor having six poles and nine slots, however, it is thought that the same effect is obtained even in a concentrated winding permanent magnet type electric motor on the basis of a combination of four poles and six slots and the other,

Accordingly, since it is possible to reduce the electric current itself flowing through the bearing portion, it is possible to lighten a bearing damage caused by the electric wear of bearing so as to enhance a bearing reliability of the displacement compressor. Further, since it is possible to mount the high performance inverter which can carry out the high speed switching, in the variable speed operation using the inverter for achieving the high efficiency of the displacement compressor, it is possible to achieve a reservation of a high energy efficiency. Therefore, it is possible to achieve the displacement compressor which is preferable for achieving the high energy efficiency and the high bearing reliability.

### Embodiment 2

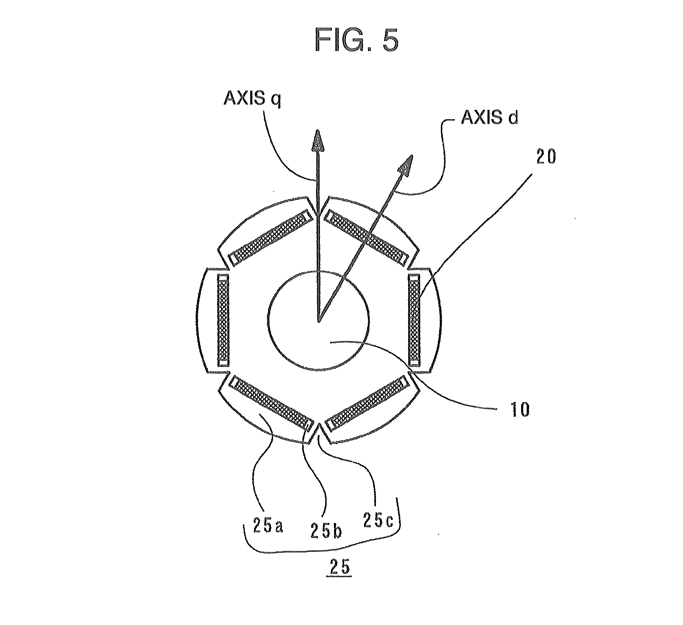

A description will be given in detail of a displacement compressor showing a second embodiment for carrying out the present invention. Fig. 5 shows a cross sectional view of a rotor in accordance with the second embodiment. In this case, a description will be given of a different point from the first embodiment in a focusing manner.

A rotor 25 is provided with a rotor core 25a, and permanent magnets 20 which are respectively installed within six installation holes 25b formed in parallel to the crank shaft 10, and six magnetic poles are formed in the rotor core 25 on the basis of an installation of the permanent magnets 20, in the same manner as the first embodiment. In this case, on the assumption that an axis d is an axis which extends in a diametrical direction around a magnetic pole of the rotor core 25a, and an axis q is an axis which extends in a diametrical direction between the axis d and an adjacent axis d which is spaced at 90 degree by an electric angle, a feature of the present embodiment exists in a provision of a means for suppressing a short-circuit flux flowing between the adjacent magnetic poles, for example, a concave groove 25c having a V-shaped cross section formed by cutting into an inner diameter side from an outer diameter side, on an outer peripheral surface of the rotor core 25a on the axis q.

It is possible to smoothen a magnetic flux density distribution of the rotor 25 by the permanent magnets 20 in a circumferential direction, by the provision of the concave groove 25c. On the other hand, in the case that the distribution of the magnetic flux density is not smooth, a magnetic flux distribution of the rotor 25 tends to be asymmetric, and it has been known that an electric current circulating the crank shaft 10 and the shaft support portion is generated if this asymmetry exists. Accordingly, it is possible to securely suppress an increase of the bearing current flowing in the bearing portion by the provision of the concave groove 25c in accordance with the present embodiment in the rotor 25 and the combination of the connection among the neutral points in the respective three phases.

### Embodiment 3

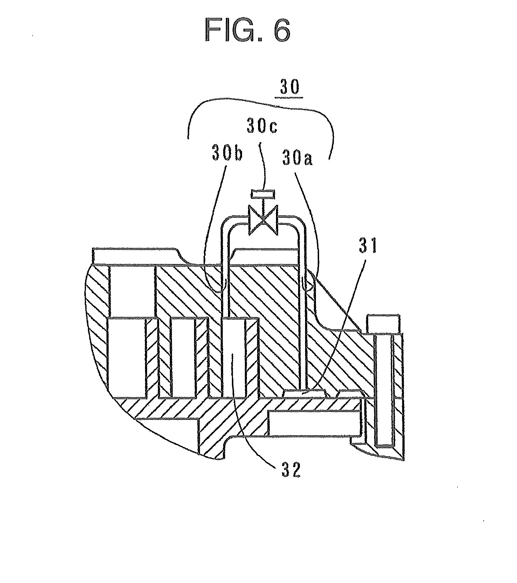

A description will be given in detail of a displacement compressor showing a third embodiment for carrying out the present invention with reference to Fig. 6. Fig. 6 shows a capacity control mechanism of a displacement compressor in accordance with the third embodiment. The capacity control mechanism may have a capacity control function communicating a suction space with a compressing chamber, and a scroll type is shown so as to be representative of a compressing type shown in Fig. 6, however, any compressing type such as a rotary type, a reciprocating type or a screw type may be employed. In this case, a description will be given only of a different point from the first and second embodiments.

A capacity control mechanism 30 in accordance with the embodiment of the present invention is constructed by a communication path 30a with a suction space 31, a communication path 30b with a compressing chamber 32, and a control means 30c controlling a communication between the suction space 31 and the compressing chamber 32. The control means 30c controlling the communication between the suction space 31 and the compressing chamber 32 communicates the suction space 31 with the compressing chamber 32 in the case that a rotating speed of the electric motor 9 reaches a set value or less by directly employing a rotating speed information of the electric motor 9, or estimating the rotating speed on the basis of a circulating flow rate of a refrigerant or the like.

Since it is possible to suppress an increase of a driving current (an input current from an inverter to a motor) at a time of a low speed operation in conjunction with an increase of a low speed and high load operation condition caused by a large capacity of an air conditioning device in recent years, on the basis of an operation of the capacity control mechanism 30 as mentioned above, it is possible to securely suppress an increase of a bearing current flowing in the bearing portion by combining with the connection among the neutral points in the respective three phases.

### Embodiment 4

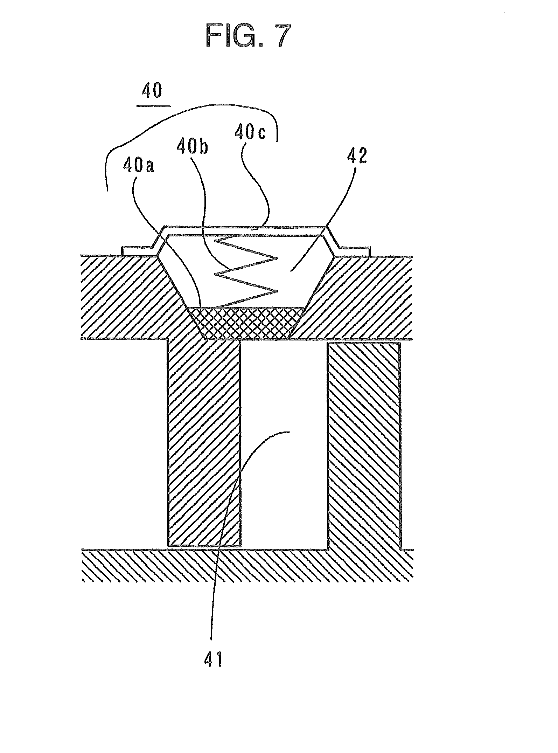

A description will be given in detail of a displacement compressor showing a fourth embodiment for carrying out the present invention with reference to Fig. 7. Fig. 7 shows a discharge valve structure of a scroll compressor in accordance with the fourth embodiment. In this case, a description will be given only of a different point from the first to third embodiments.

A discharge valve structure 40 in accordance with the embodiment of the present invention is constructed by a valve body 40a, a spring 40b, and a retainer 40c. A compressing chamber 41 starts communication with the valve body 40a of the discharge valve if a volumetric capacity of the compressing chamber 41 is reduced and a compressing stroke makes progress. Further, if a push-up force of the valve body 40a caused by a pressure within the compressing chamber 41 becomes larger, on the basis of a summation of a pressure of a discharge pressure space 42 applied to a back face of the discharge valve 40a and a push-down force generated by the spring 40b, the valve body 40a is opened and the compressed refrigerant is discharged to the discharge space 42 from the compressing chamber 41.

The discharge valve structure is an essential structure in the rotary type and the reciprocating type, however, is a selectable structure in the case of the scroll type. Since the discharge valve can be used in the case of carrying out a design corresponding to a high pressure ratio in the scroll type, however, it is possible to achieve a high pressure ratio correspondence in which a winding length of the scroll lap is regulated, it is not an essential structure. However, in order to fulfill the demands of improvement of an annual performance factor (APF) and an integrated part load value (IPLV) in recent years, it is necessary to achieve a compatibility of an improvement of an energy efficiency at a time of a low load and the demands of a quick heating or a quick cooling/freezing performance under a high load. Therefore, the winding length of the scroll lap is frequently constructed to be short so as to correspond to the low load time. On the contrary, in the high load and high pressure ratio operation in the case that the discharge valve is not provided, due to the scroll lap corresponding to the low pressure ratio, since the compressing chamber is open to the discharge space in a state of the low pressure ratio, a very great short compressing state is generated, an energy efficiency is lowered, and an increase of an input current to the electric motor 9 is caused. As a result, an increase of the bearing current flowing in the bearing portion is brought about. Taking this point into consideration, the present embodiment is structured such as to prevent an increase of the bearing current of the scroll compressor by combining the connection among the neutral points in the respective three phases with the discharge valve structure.

### Embodiment 5

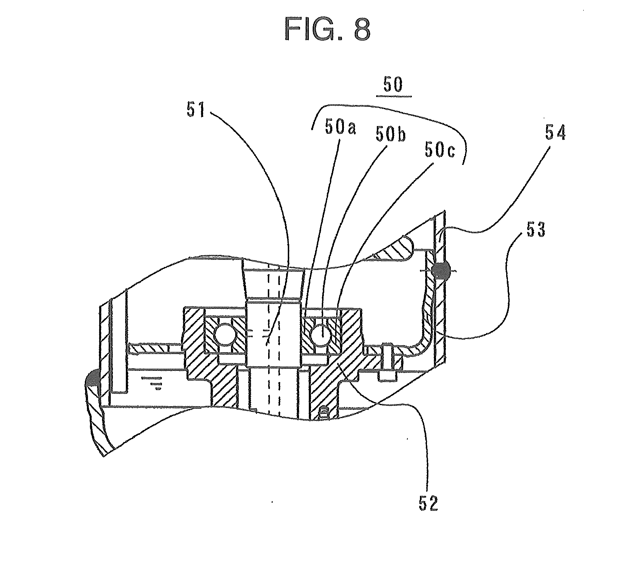

A description will be given in detail of a displacement compressor showing a fifth embodiment for carrying out the present invention with reference to Fig. 8. Fig. 8 shows a structure around a shaft support portion of the displacement compressor in accordance with the fifth embodiment. In this case, a description will be given only of a different point from the first to fourth embodiments.

The structure around the shaft support portion in accordance with the embodiment of the present invention is constructed by a shaft support portion 50 which rotatably engages a crank shaft 51 and is arranged in an auxiliary bearing housing 52, and an auxiliary frame 53 which is engaged with the auxiliary bearing housing 52 and is fixed to a sealed container 54. The shaft support portion 50 is a rolling bearing which is constructed by an inner ring 50a, rolling elements 50b and an outer ring 50c, and a ball bearing is representatively illustrated.

In the present embodiment, an electric current passing through the shaft support portion 50 from the crank shaft 51 in the shaft support portion is shut off, by constructing any one of the inner ring 50a, the rolling elements 50b and the outer ring 50c in the shaft support portion 50 or a combination thereof as a ceramics corresponding to an insulating material, forming a ceramics membrane in the inner ring 50a, the rolling elements 50b and the outer ring 50c, or forming a resin coating having a high insulating property, for example, a polyphenylene sulfide (PPS) resin membrane. The bearing current increase of the displacement compressor is effectively prevented by combining the structure around the shaft support portion with the connection among the neutral points in the respective three phases. In this case, the same effect can be obtained even by such a structure that a coating or a sheet having a high insulating property is arranged in an outer peripheral side of the shaft support portion 50.

### Embodiment 6

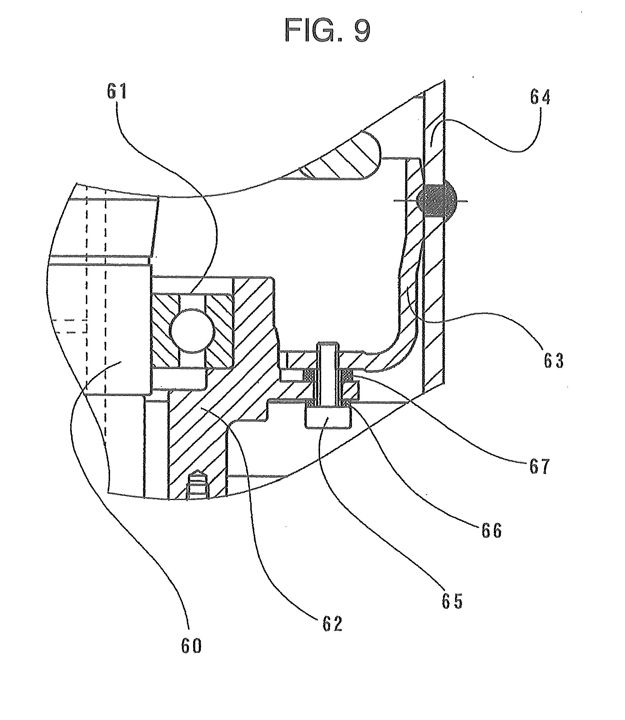

A description will be given in detail of a displacement compressor showing a sixth embodiment for carrying out the present invention with reference to Fig. 9. Fig. 9 shows a structure around a shaft support portion of the displacement compressor in accordance with the sixth embodiment. In this case, a description will be given only of a different point from the first to fifth embodiments.

The structure around the shaft support portion in accordance with the embodiment of the present invention is constructed by a shaft support portion 61 which rotatably engages a crank shaft 60 and is arranged in an auxiliary bearing housing 62, and an auxiliary frame 63 which is engaged with the auxiliary bearing housing 62 and is fixed to a sealed container 64. The shaft support portion 61 is illustrated by a rolling bearing representatively.

In an engagement between the auxiliary bearing housing 62 and the auxiliary frame 63, a fixing bolt 65 and insulating sheets 66 and 67 are arranged as illustrated. The insulating sheets 66 and 67 may employ a ceramics or a resin having a high insulating property, for example, a polyphenylene sulfide (PPS) resin. In this case, the insulating sheet 66 is not necessary in the case that a bolt having an insulating property is used as the fixing bolt 65. Further, the insulating sheets 66 and 67 are not necessary in the case that any one of the auxiliary bearing housing 62 and the auxiliary frame 63 or both of them are formed by using a resin having a high insulating property.

Alternatively, the electric current passing through the shaft support portion 61 is suppressed by applying an annealing treatment to any one of the auxiliary bearing housing 62 and the auxiliary frame 63 or both of them, forming an oxide film having a high insulating property on a surface and increasing a resistance value from the crank shaft 60 to the sealed container 64. At this time, the insulating sheet 66 may be interposed as a countermeasure of preventing an oxide film layer from coming off at a time of fixing the fixing bolt 65.

On the basis of these structures, the electric current passing through the shaft support portion 61 from the crank shaft 60 is shut off. It is possible to effectively prevent an increase of the bearing current of the displacement compressor by combining the structure around the shaft support portion with the connection among the neutral points in the respective three phases.

### Embodiment 7

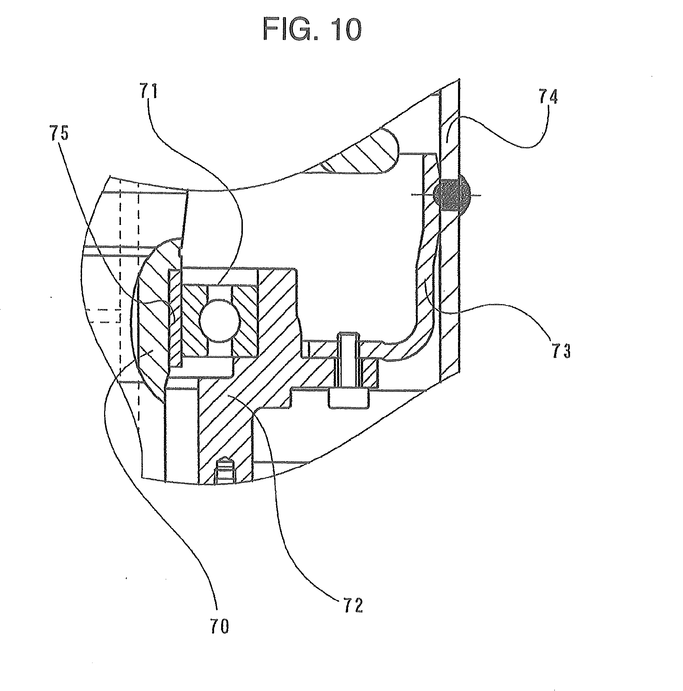

A description will be given in detail of a displacement compressor showing a seventh embodiment for carrying out the present invention with reference to Fig. 10. Fig. 10 shows a structure around a shaft support portion of the displacement compressor in accordance with the seventh embodiment. In this case, a description will be given only of a different point from the first to sixth embodiments.

The structure around the shaft support portion in accordance with the embodiment of the present invention is constructed by a shaft support portion 71 which rotatably engages a crank shaft 70 and is arranged in an auxiliary bearing housing 72, and an auxiliary frame 73 which is engaged with the auxiliary bearing housing 72 and is fixed to a sealed container 74. The shaft support portion 71 is illustrated by a rolling bearing representatively.

An insulating member 75 is provided in the crank shaft 70 portion which rotatably engages with the shaft support portion 71, and may employ a ceramics or a resin material having a high insulating property, for example, a polyphenylene sulfide (PPS) resin or the like. Further, an attachment of the insulating member 75 to the crank shaft 70 may be decided in correspondence to a used condition of the displacement compressor, and the insulating member 75 may be formed as a ring shape so as to be firmly fitted to the crank shaft 70 or may be formed as a half split shape or a split shape so as to be loosely fitted thereto.

On the basis of these structures, the electric current passing through the shaft support portion 71 from the crank shaft 70 is shut off. It is possible to effectively prevent the increase of the bearing current of the displacement compressor by combining the structure around the shaft support portion with the connection among the neutral points in the respective three phases.

## Claims

1. A displacement compressor comprising:
a compressing mechanism portion (2) carrying out a compressing action;
a driving means (3) for driving said compressing mechanism portion;
an electric motor (9) serving as a substantial part of said driving means (3) and applied a Y connection three-phase coil winding having a plurality of neutral points (22);
an inverter control device driving said electric motor;
a crank shaft (10) rotationally driven by said electric motor (9);
a crank shaft support portion (13, 14) rotatably engaging said crank shaft (10);
a frame portion (11) engaging the shaft support portion (13, 14) of said crank shaft (10); and
a sealed container (4) storing said compressing mechanism portion (2) and said driving means (3),
**characterized in that** the neutral points (22) of the electric motor (9) to which the Y connection three-phase coil winding having a plurality of said neutral points (22) is applied are connected to each other.

2. A displacement compressor as claimed in claim 1, **characterized in that** said electric motor (9) is constructed as a permanent magnet type electric motor having a stator (7) which is formed by concentrated winding a stator coil winding (21) around a stator core (7a) of said electric motor (9), and a rotor (8) which is opposed to said stator (7) via a gap in a peripheral direction and forms a magnetic pole by installing a permanent magnet (20) to a rotor core (8a) in an axial direction.

3. A displacement compressor as claimed in claim 2, **characterized in that** said permanent magnet type electric motor is constructed so as to have six poles and nine slots.

4. A displacement compressor as claimed in claim 1, **characterized in that** the store core (7a) of said electric motor (9) is annealed.

5. A displacement compressor as claimed in claim 1, **characterized in that** a plurality of permanent magnets (20) are arranged in the rotor core (8a) of said electric motor (9), and a part of an outer peripheral surface of said rotor core (8a) close to an axis q is cut, on the assumption that an axis d is close to a magnetic flux of said permanent magnet (20), and the axis q is an axis which is orthogonal to said axis d at an electrical angle.

6. A displacement compressor as claimed in claim 1, **characterized in that** the shaft support portion (13, 14) of said crank shaft (10) is insulated.

7. A displacement compressor as claimed in claim 6, **characterized in that** the insulation of said crank shaft support portion (13, 14) is achieved by interposing an insulating member (75) between said crank shaft support portion (13, 14), and said frame portion (11) engaging with said crank shaft support portion (13, 14).

8. A displacement compressor as claimed in claim 6, **characterized in that** the insulation of said crank shaft support portion (13, 14) is achieved by molding by resin said frame portion (11) engaging with said crank shaft support portion (13, 14).

9. A displacement compressor as claimed in claim 6, **characterized in that** the insulation of said crank shaft support portion (13, 14) is achieved by applying an annealing to said frame portion (11) engaging with said crank shaft support portion (13, 14).

10. A displacement compressor as claimed in claim 6, **characterized in that** the insulation of said crank shaft support portion (13, 14) is achieved by interposing an insulating member in said crank shaft portion (10) rotatably engaging with said crank shaft support portion (13, 14).

11. A displacement compressor as claimed in claim 1, **characterized in that** a field-weakening control is used as said inverter control device driving said electric motor (9).

12. A displacement compressor as claimed in claim 1, **characterized in that** a mechanical capacity control means (30) is constructed in said compressing mechanism portion (2).

13. A displacement compressor as claimed in claim 1, **characterized in that** a discharge valve (40) is used in said compressing mechanism portion (2).
